# EUROPEAN PATENT SPECIFICATION

(11) **EP 4 407 837 B1**
(45) Date of publication and mention of the grant of the patent: **18.03.2026**
(21) Application number: 22892692.9
(22) Date of filing: 02.11.2022
(51) Int. Cl.: H02K 1/18

(54) **ROTATING ELECTRIC MACHINE, COMPRESSOR, AND REFRIGERATOR DEVICE**
ELEKTRISCHE DREHMASCHINE, VERDICHTER UND KÜHLVORRICHTUNG
MACHINE ÉLECTRIQUE TOURNANTE, COMPRESSEUR ET DISPOSITIF DE RÉFRIGÉRATION

(30) Priority: 09.11.2021 JP 2021182476
(43) Date of publication of application: 31.07.2024
(73) Proprietor: Daikin Industries, Ltd., Osaka-Shi, Osaka 530-0001 (JP)
(72) Inventor: SHIMIZU Shunsuke, Osaka-shi, Osaka 530-8323 (JP); HIRANO Masaki, Osaka-shi, Osaka 530-8323 (JP); NAKA Shojiro, Osaka-shi, Osaka 530-8323 (JP); KITSU Yoshimi, Osaka-shi, Osaka 530-8323 (JP)
(74) Representative: Goddar, Heinz J.
(86) International application number: PCT/JP2022/041044
(87) International publication number: WO 2023/085193

(56) References cited:
- WO-A1-2019/087358
- JP-A- 2000 224 787
- JP-A- 2013 162 676
- JP-A- 2013 162 676
- JP-A- 2017 034 819
- JP-A- 2018 085 853
- US-A1- 2020 373 796

## Description

### TECHNICAL FIELD

The present disclosure relates to a rotating electric machine, a compressor, and a refrigeration apparatus.

### BACKGROUND ART

A motor described in Patent Document 1 includes a closed container and a stator fixed in the closed container. The stator has a plurality of electrical steel sheets stacked in an axial direction. The electrical steel sheets are provided with a crimping part, and adjacent ones of the electrical steel sheets in the stacking direction are fastened to each other by the crimping part.
US 2020/373796 A1 discloses a stator assembly that has a motor housing of a cylindrical shape and a stator fixed to an inner peripheral wall of the motor housing by a shrink fitting process. A stator core of the stator includes a projecting portion in contact with the motor housing and a stopper portion, which is smaller than the projecting portion in a radial direction. The stopper portion is in contact with the motor housing in an actual-use temperature range. The projecting portions and the stopper portions are alternately arranged in a circumferential direction in a cyclic manner. A cycle unit is composed of one or more than one projecting portion and one or more than one stopper portion. Multiple stator core sheets are built up in such a way that the cycle units are alternately arranged in an axial direction and neighboring stator core sheets are displaced in the circumferential direction by a predetermined shift angle. A curvature radius of the projecting portion at a position, at which the projecting portion is in contact with the motor housing, is smaller than a radius of a circumscribed circle of the projecting portion.
JP 2013-162676 A addresses the problem of how to provide an electric motor in which laminated steel plates are firmly integrated by V-caulking parts while suppressing the performance degradation and cost increase of the electric motor, and a compressor using the electric motor. As solution, it is suggested: An electric motor comprises a stator and a rotor each of which is formed by laminating a plurality of steel plates Sp and integrating them by V-caulking parts. The stator is locally fixed to the inside of a cylindrical member, and the steel plates forming the stator include first steel plates fixed to the cylindrical member and second steel plates not fixed to the cylindrical member in the lamination direction. V-caulking parts include the first V-caulking parts. In the first V-caulking part, when a cutting line of the first V-caulking part is projected on a first straight line parallel to a straight line passing through the cylinder center of the cylindrical member and the centroid of the first V-caulking part and on a second straight line orthogonal to the first straight line on a lamination plane of the steel plates, a projection length to the first straight line is longer than a projection length to the second straight line.

### CITATION LIST

### PATENT DOCUMENT

Patent Document 1: Japanese Unexamined Patent Publication No. 2017-034819

### SUMMARY OF THE INVENTION

The invention is set out in the appended claims.

### TECHNICAL PROBLEM

In a method of fixing a casing and a stator core to each other after pressing an electrode against the stator core as in arc welding, compressive stress may concentrate on a welded portion, and an iron loss may increase. In order to avoid this situation, in Patent Document 1, the crimping part and a welded portion are provided on the same radial direction of a stator core. However, depending on stress distribution generated in the stator core, there is a probability that an increase in iron loss cannot be sufficiently reduced.

It is an object of the present disclosure to reduce an increase in an iron loss of a rotating electric machine.

### SOLUTION TO THE PROBLEM

A first aspect is directed to a rotating electric machine including a casing (11), a stator core (32) having a plurality of electrical steel sheets stacked on each other and including a cylindrical yoke (34), a plurality of teeth (35) arranged in a circumferential direction and extending radially inward of the yoke (34), and crimping portions (50) arranged in the yoke (34) and fixing adjacent ones of the electrical steel sheets in a stacking direction, and radial fixing portions (60) each arranged within an area of a first angle between two lines connecting an axial center of the stator core (32) and adjacent two of the crimping portions (50) in the circumferential direction and fixing the casing (11) and the stator core (32) using a method of applying compressive stress to the stator core (32) radially inward from an outside in a point-like or line-like manner, and the crimping portions (50) being each formed in a rectangular shape having long sides extending along the radial direction of the stator core (32) and short sides extending along the circumferential direction of the stator core (32) when the stator core (32) is viewed in an axial direction.

In the first aspect, it has been found that each of the crimping portions (50) are arranged such that the long sides extend along the radial direction and the short sides extend along the circumferential direction, so that compressive stress in the circumferential direction is generated on both sides of the crimping portion (50) in the circumferential direction. The radial fixing portions (60) and the crimping portions (50) are arranged with shifted from each other in the circumferential direction, and therefore, compressive stress by the crimping portions (50) is reduced by tensile stress in the circumferential direction by the radial fixing portions (60). As a result, the compressive stress applied in the circumferential direction to the stator core can be canceled, and an increase in iron loss can be reduced.

A second aspect of the present disclosure is an embodiment of the first aspect. In the second aspect, the radial fixing portions (60) are each arranged at a position at which compressive stress acting in the circumferential direction of the yoke (34) by the crimping portions (50) is reduced.

In the second aspect, on the compressive stress caused by the crimping portions (50) and acting in the circumferential direction of the yoke (34), the tensile stress caused by the radial fixing portions (60) and acting in the same direction as that of the compressive stress acts, and therefore, the compressive stress in the circumferential direction of the yoke (34) can be reduced.

A third aspect of the present disclosure is an embodiment of the first or second aspect. In the third aspect, the crimping portions (50) are each arranged at a position between 1/4 to 3/4 of a second angle between two lines connecting the axial center of the stator core (32) and adjacent two of the radial fixing portions (60) in the circumferential direction.

In the third aspect, the crimping portions (50) are arranged at the positions between 1/4 to 3/4 of the second angle between adjacent ones of the radial fixing portions (60), and therefore, the compressive stress by the crimping portions (50) can be reduced by the tensile stress by the radial fixing portions (60).

A fourth aspect of the present disclosure is an embodiment of any one of the first to third aspects. In the fourth aspect, the crimping portions (50) are each arranged such that a length from an outer peripheral edge of the yoke (34) to the crimping portions (50) is equal to or less than 1/3 of a length from the outer peripheral edge to an inner peripheral edge of the yoke (34) in the radial direction of the stator core (32).

In the fourth aspect, the tensile stress by the radial fixing portions (60) is caused near the outer peripheral edge of the yoke (34). Thus, by providing the crimping portions (50) at the positions close to the outer peripheral edge of the yoke (34), the compressive stress by the crimping portions (50) is caused near the outer peripheral edge of the yoke (34), and the compressive stress caused in the yoke (34) can be reduced by the tensile stress.

A fifth aspect is an embodiment of any one of the first to fourth aspects. In the fifth aspect, the radial fixing portions (60) are arranged between every adjacent ones of the crimping portions (50) in the circumferential direction of the stator core (32).

In the fifth aspect, the compressive stress caused in the circumferential direction over the entire circumference of the yoke (34) can be reduced.

A sixth aspect is an embodiment of any one of the first to fifth aspects. In the sixth aspect, the crimping portions (50) each have inclined surfaces (52) inclined from both short sides toward a center of a long side in a cross-sectional view of the stator core (32) orthogonal to the circumferential direction.

In the sixth aspect, the compressive stress acting in the circumferential direction of the stator core (32) increases. Thus, by reducing the sizes of the crimping portions (50) when the stator core (32) is viewed in the axial direction, the compressive stress in the circumferential direction of the stator core (32) can be reduced, and degradation of magnetic properties around the crimping portions (50) can be reduced. This can reduce an increase in iron loss of the stator core (32) and a decrease in the efficiency of an electric motor (30).

A seventh aspect is an embodiment of any one of the first to sixth aspects. In the seventh aspect, the crimping portions (50) are arranged radially outward of the teeth (35).

In the seventh aspect, on the outside of the teeth (35) in the radial direction, a magnetic flux density is relatively low during operation of the rotating electric machine. By arranging the crimping portions (50) at such relatively low magnetic flux density positions on the outside of the teeth (35) in the radial direction, an increase in iron loss due to the crimping portions (50) can be reduced.

An eighth aspect is directed to a compressor including the rotating electric machine of any one of the first to seventh aspects.

A ninth aspect is directed to a refrigeration apparatus including the compressor of the eighth aspect.

### BRIEF DESCRIPTION OF THE DRAWINGS

FIG. 1 is a schematic configuration diagram of a refrigeration apparatus according to an embodiment.
FIG. 2 is a longitudinal cross-sectional view corresponding to a cross section parallel with the axial direction of a compressor according to the embodiment.
FIG. 3 is a transverse cross-sectional view corresponding to a cross section perpendicular to the axial direction of an electric motor.
FIG. 4 is a partially enlarged view of a cross section taken along line IV-IV in FIG. 3.
FIG. 5 is a transverse cross-sectional view corresponding to a cross section perpendicular to the axial direction of the electric motor of FIG. 3 with additional radial fixing portions
FIG. 6 is a diagram illustrating a distribution of stress caused around a crimping portion in a case where only the crimping portion is provided.
FIG. 7 is a table showing stress in a case where only crimping portions are provided, a case where only radial fixing portions are provided, and a case where both the crimping portions and the radial fixing portions are provided.
FIG. 8 is a table corresponding to FIG. 7 in a case where the crimping portions and the radial fixing portions are arranged on the same radial directions.
FIG. 9 is a schematic view of a magnetic flux density generated from a tooth toward a yoke.
FIG. 10 is a view corresponding to FIG. 4, which illustrates a crimping portion according to a variation.
FIG. 11 is a view corresponding to a cross section perpendicular to the axial direction in FIG. 5, which illustrates an electric motor according to another embodiment.

### DESCRIPTION OF EMBODIMENTS

Embodiments of the present disclosure will be described in detail below with reference to the drawings.

A compressor (10) of the present disclosure is provided for a refrigeration apparatus (1).

### (1) Overview of Refrigeration Apparatus

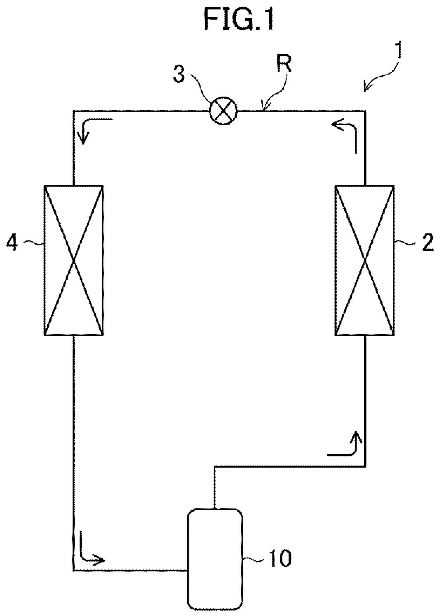

The refrigeration apparatus (1) illustrated in FIG. 1 includes the compressor (10) of the present disclosure. The refrigeration apparatus (1) includes a refrigerant circuit (R) filled with a refrigerant. The refrigerant circuit (R) has the compressor (10), a radiator (2), a decompression mechanism (3), and an evaporator (4). The decompression mechanism (3) is an expansion valve. The refrigerant circuit (R) performs a vapor compression refrigeration cycle.

In the refrigeration cycle, the refrigerant compressed by the compressor (10) dissipates heat to air in the radiator (2). The refrigerant having dissipated heat is decompressed by the decompression mechanism (3) and is evaporated in the evaporator (4). The evaporated refrigerant is sucked into the compressor (10).

The refrigeration apparatus (1) is an air conditioner. The air conditioner may be any of a cooling-only apparatus, a heating-only apparatus, or an air conditioner switchable between cooling and heating. In this case, the air conditioner has a switching mechanism (e.g., a four-way switching valve) configured to switch the direction of circulation of the refrigerant. The refrigeration apparatus (1) may be a water heater, a chiller unit, or a cooling apparatus configured to cool air in an internal space. The cooling apparatus cools the air in an internal space of a refrigerator, a freezer, a container, or the like. The expansion mechanism is an electronic expansion valve, a temperature-sensitive expansion valve, an expander, or a capillary tube.

### (2) Compressor

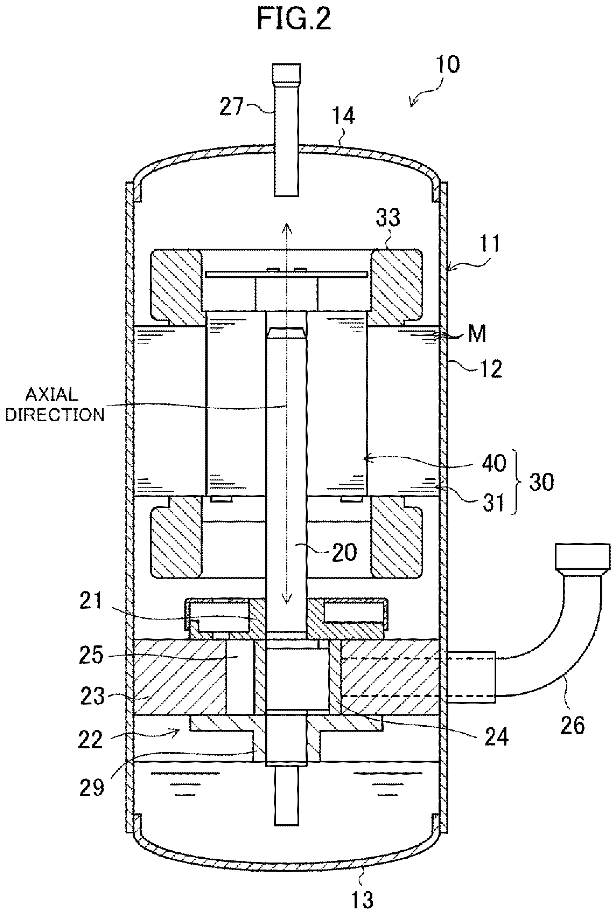

As illustrated in FIG. 2, the compressor (10) has a casing (11), an electric motor (30), a drive shaft (20), and a compression mechanism (22). The compressor (10) is a rotary compressor. Precisely, the compressor (10) is a compressor of an oscillating piston type. The compressor (10) may be a scroll compressor, a screw compressor, or a turbo compressor.

### (2-1) Casing

The casing (11) houses the electric motor (30), the drive shaft (20), and the compression mechanism (22). The casing (11) is a hermetic container. The inside of the casing (11) is filled with high-pressure refrigerant discharged from the compression mechanism (22).

The casing (11) is made of a metal material. The casing (11) has a barrel (12), a bottom portion (13), and a top portion (14). The barrel (12) is a tubular metal member. At each of both ends of the barrel (12) in the axial direction, an opening is formed. In this example, the axial direction of the barrel (12) corresponds to the vertical direction. The bottom portion (13) closes the lower opening of the barrel (12). The top portion (14) closes the upper opening of the barrel (12).

### (2-2) Electric Motor

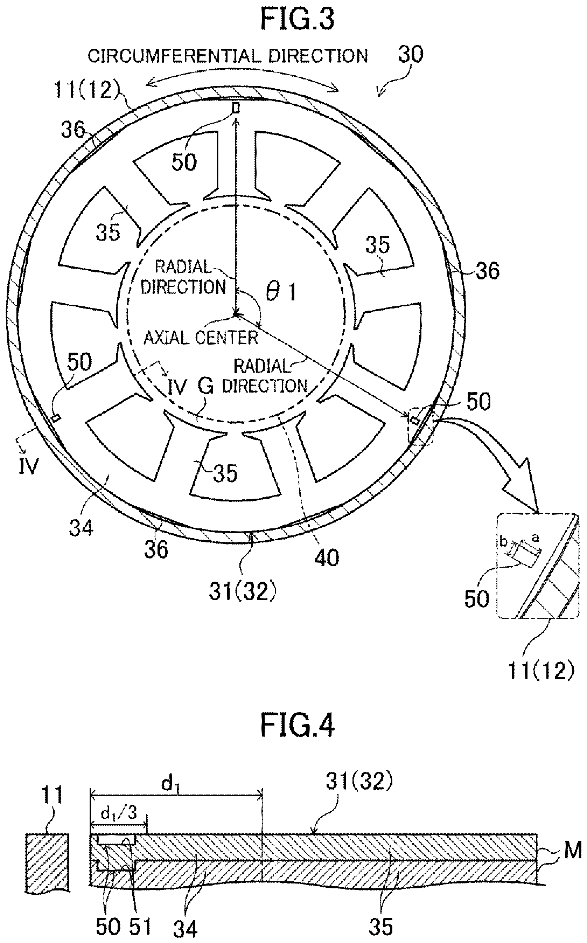

The electric motor (30) illustrated in FIGS. 2 and 3 is an example of a rotating electric machine. The electric motor (30) is arranged above the compression mechanism (22). The operation frequency of the electric motor (30) is controlled by an inverter device. In other words, the compressor (10) is an inverter compressor having a variable operation frequency.

The electric motor (30) has a stator (31) and a rotor (40). The stator (31) is supported by the barrel (12) of the casing (11). The stator (31) has a stator core (32) and a coil (33) wound around the stator core (32). The stator core (32) includes electrical steel sheets (M) stacked in the axial direction. As illustrated in FIG. 3, the stator core (32) has a cylindrical yoke (34) and a plurality (nine in this example) of teeth (35) arranged in the circumferential direction of the yoke (34) and extending radially inward of the yoke (34). The yoke (34) is provided with crimping portions (50) for fixing the electrical steel sheets adjacent to each other in the stacking direction. The stator core (32) and its fixing structure will be described in detail later.

The outer peripheral surface of the yoke (34) has a plurality (nine in this example) of core cuts (36). The core cuts (36) are each a groove extending in the axial direction of the stator core (32). Each core cut (36) is formed at a position facing an associated one of the teeth (35) with the yoke (34) intervened therebetween.

The rotor (40) is arranged inside the stator core (32). The drive shaft (20) is fixed in the axial center of the rotor (40). A plurality of permanent magnets (not shown) is embedded in the rotor (40).

An annular gap (G) is formed between the teeth (35) of the stator (31) and the rotor (40) in a cross-sectional view.

### (2-3) Drive Shaft

The drive shaft (20) extends vertically along the axial center of the casing (11). The drive shaft (20) is rotationally driven by the electric motor (30). The drive shaft (20) is rotatably supported by a bearing (21).

### (2-4) Compression Mechanism

The compression mechanism (22) has a cylinder (23) and a piston (24) provided inside the cylinder (23). A cylinder chamber (25) is formed between the inner peripheral surface of the cylinder (23) and the outer peripheral surface of the piston (24). In the cylinder chamber (25), fluid is compressed by the piston (24) driven by the drive shaft (20).

### (2-5) Suction Pipe and Discharge Pipe

The compressor (10) has a suction pipe (26) and a discharge pipe (27). The suction pipe (26) penetrates the barrel (12) in the radial direction, and communicates with the cylinder chamber (25). Low-pressure refrigerant in the refrigerant circuit (R) is sucked into the cylinder chamber (25) through the suction pipe (26). The discharge pipe (27) penetrates the top portion (14) in the axial direction, and communicates with an internal space of the casing (11). Refrigerant compressed in the compression mechanism (22) flows through the core cuts (36) and gap (G) of the electric motor (30), and is then sent to the refrigerant circuit (R) through the discharge pipe (27).

### (3) Details of Stator Core

### (3-1) Configuration of Core Portion of Stator Core

The details of the stator core (32) will be described with reference to FIGS. 2 to 4. In the following description, the terms "axial direction," "circumferential direction," and "radial direction" mean the axial direction, circumferential direction, and radial direction of the stator (31), respectively, unless otherwise specified. In this example, the axial direction of the stator (31) corresponds to the axial direction of the drive shaft (20) as illustrated in FIG. 2.

In the stator core (32), the plurality of electrical steel sheets (M) is stacked from one end to the other end in the axial direction. In the stator core (32) of this example, all the electrical steel sheets (M) have the same structure. Precisely, all the electrical steel sheets (M) have the same shape, thickness, and material. All the electrical steel sheets (M) are arranged so as to overlap with each other as a whole.

In this embodiment, three crimping portions (50) are provided in the yoke (34). Each of the crimping portions (50) is formed in a rectangular shape as viewed from the axial center of the stator core (32). Specifically, when the stator core (32) is viewed from the axial center, the crimping portion (50) is formed such that the long sides a extend along the radial direction of the stator core (32) and the short sides b extend along the circumferential direction of the stator core (32). The crimping portion (50) is formed so as to be recessed in the surface of the yoke (34). Specifically, the crimping portion (50) has a bottom (51) (see FIG. 4). The bottom (51) is flat in a cross-sectional view perpendicular to the circumferential direction of the stator core (32). The three crimping portions (50) have the same shape. All the crimping portions (50) provided in the yoke (34) are each formed in a rectangular shape such that the long sides a extend along the radial direction of the stator core (32) and the short sides b extend along the circumferential direction of the stator core (32) when the stator core (32) is viewed in the axial direction. In other words, the yoke (34) is provided with no crimping portion in such a rectangular shape that the long sides a extend along the circumferential direction of the stator core (32) and the short sides b extend along the radial direction of the stator core (32) when the stator core (32) is viewed in the axial direction.

The three crimping portions (50) are arranged at equal intervals (equal pitches) in the circumferential direction of the stator core (32). Specifically, when an angle between two lines connecting the axial center of the stator core (32) and adjacent two of the crimping portions (50) in the circumferential direction is a first angle θ1, the two crimping portions (50) adjacent to each other in the circumferential direction are arranged at a first angle θ1 of 120°.

The crimping portion (50) is arranged such that a length from the outer peripheral edge of the yoke (34) to the crimping portion (50) is equal to or less than 1/3 of a length from the outer peripheral edge to the inner peripheral edge of the yoke (34) in the radial direction of the stator core (32). In this embodiment, when a distance in the radial direction from the outer peripheral edge to the inner peripheral edge of the yoke (34) is d1, all the long sides of the crimping portions (50) are within an area of 1/3 of d1 from the outer peripheral edge of the yoke (34) (see FIG. 4).

The crimping portion (50) is arranged radially outward of the tooth (35) in the radial direction of the stator core (32). In other words, the crimping portion (50) and the tooth (35) are arranged in the same radial direction.

### (3-2) Fixing Structure for Stator Core

The stator (31) has radial fixing portions (60) for fixing the stator core (32) and the casing (11) to each other. The radial fixing portions (60) fix the inner peripheral surface of the casing (11) and the outer peripheral surface of the stator core (32) to each other. Specifically, the radial fixing portions (60) fix the casing (11) and the stator core (32) to each other using a method of applying compressive stress to the stator core (32) radially inward from an outside. The radial fixing portions (60) of this embodiment fix the casing (11) and the stator core (32) to each other by arc welding (precisely, plug welding). Specifically, when an electrode for arc welding is pressed against the stator core (32), point-like compressive stress is transmitted from the electrode to the stator core (32).

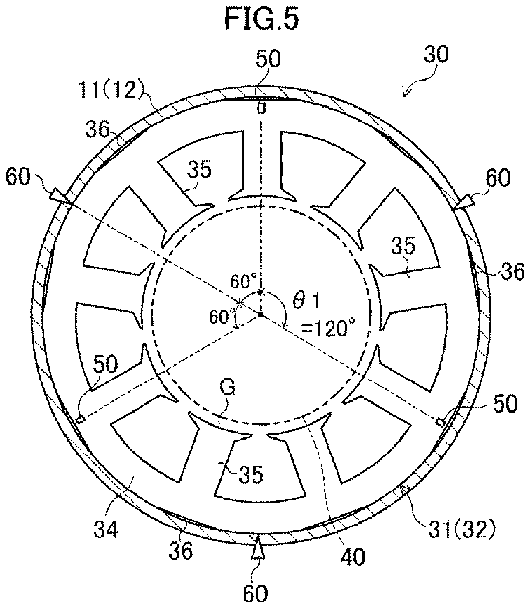

As illustrated in FIG. 5, in this embodiment, the stator (31) includes three radial fixing portions (60). The three radial fixing portions (60) are arranged on the same plane. Each of the radial fixing portions (60) is arranged in the radial direction passing through the center between adjacent two of the teeth (35) in the circumferential direction as viewed from the axial center of the stator core (32). The radial fixing portions (60) are arranged at equal intervals (equal pitches) in the circumferential direction. Specifically, each of the radial fixing portions (60) is arranged within the area of the first angle. In this embodiment, the radial fixing portion (60) is provided at a position corresponding to an intermediate angle of the first angle. Since the first angle of this embodiment is 120°, the radial fixing portion (60) is provided at a position of 60° from one of adjacent two of the crimping portions (50) in the circumferential direction toward the other crimping portion (50) about the axial center of the stator core (32). The radial fixing portions (60) of this embodiment are arranged one by one between every adjacent two of the crimping portions (50) in the circumferential direction of the stator core (32).

When one of the ends of the stator core (32) in the axial direction is an upper end and the other end is a lower end, the three radial fixing portions (60) are arranged at the same height. The three radial fixing portions (60) are preferably arranged at a height position in the middle between the upper end and the lower end.

### (3-3) Method for Fixing Stator

A method for fixing the casing (11) and the stator (31) by arc welding includes the following steps.

First Step: a through-hole is formed in the barrel (12) of the casing (11).

Second Step: an automatic welding machine presses an electrode against the outer peripheral surface of the stator core (32) through the through-hole. At this time, point-like compressive stress is applied to the stator core (32) radially inward from an outside.

Third Step: the automatic welding machine moves the electrode radially outward such that a clearance between the electrode and the stator core is set to a predetermined value.

Fourth Step: the automatic welding machine generates arc discharge between the electrode and the stator core. Accordingly, the casing (11) and the stator core (32) are welded to each other. The through-hole is closed by the welded portion.

### (4) Problems due to Positions of Radial Fixing Portions and Crimping Portions

In a case where the casing and the stator are fixed to each other by providing the plurality of radial fixing portions in the circumferential direction of the stator core as in arc welding, compressive stress concentration portions are formed in portions of the yoke on both sides of each of the radial fixing portions due to the yoke being pressed against the casing. If the crimping portions are provided in such compressive stress concentration portions, the compressive stress further increases to increase an iron loss, resulting in a decrease in the efficiency of the electric motor. Thus, the radial fixing portions are arranged on the radial direction on which the crimping portions are arranged (the crimping portions and the radial fixing portions are arranged on the same radial directions) so that an increase in stress in the compressive stress concentration portions can be avoided.

However, when the crimping portions and the radial fixing portions are arranged on the same radial directions, compressive stresses generated in the circumferential direction in the crimping portions and the radial fixing portions are added together, and as a result, greater compressive stress may be generated in the yoke in the vicinity of the crimping portions and the iron loss may increase. In order to reduce an increase in the iron loss, it is necessary to arrange the crimping portions and the radial fixing portions based on stress distribution in consideration of the type, direction, and magnitude of stress acting on the stator core (32). However, no study has been conducted on such stress distribution.

### (5) Stress Distribution in Yoke by Radial Fixing Portions and Crimping Portions

The stress distribution by the radial fixing portions (60) and crimping portions (50) of the electric motor (30) of this embodiment will be described. The radial fixing portions (60) and the crimping portions (50) described below are provided at the positions described in this embodiment.

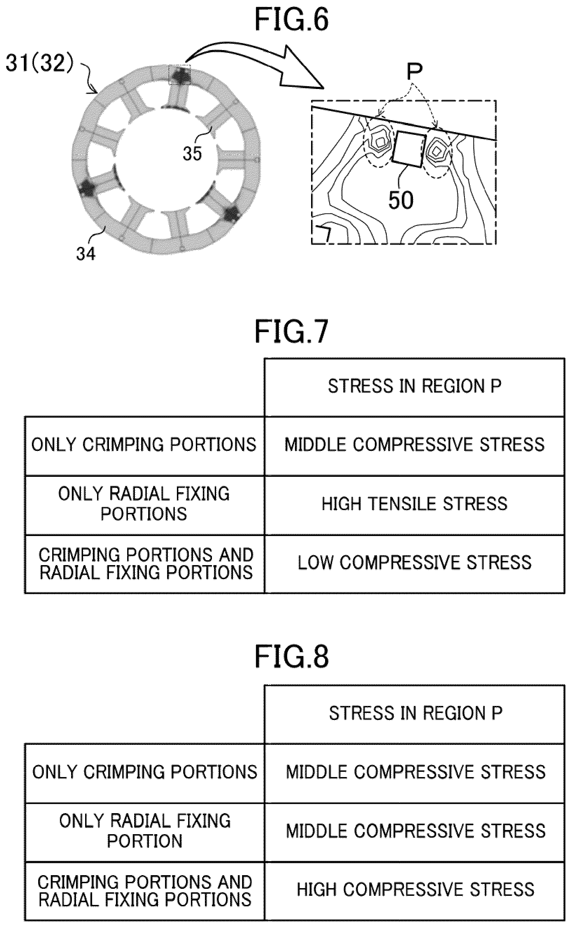

A partially-enlarged view of the yoke (34) in FIG. 6 illustrates the stress distribution around the crimping portion (50) of this embodiment by contour lines. As illustrated in FIGS. 6 and 7, compressive stress in the circumferential direction is generated in regions P on both sides of the crimping portion (50) in the circumferential direction. That is, when only the crimping portions (50) of this embodiment are provided, the compressive stress is generated in the circumferential direction of the yoke (34) in the vicinity of the crimping portions (50).

In a case where the radial fixing portions (60) are provided without the crimping portions (50), tensile stress in the circumferential direction is generated in the regions P. As described above, according to the arrangement of the radial fixing portions (60) and crimping portions (50) of this embodiment, in the regions P, the crimping portions (50) generate the compressive stress in the circumferential direction, and the radial fixing portions (60) generate the tensile stress in the circumferential direction. Thus, when the radial fixing portions (60) and the crimping portions (50) are provided, the compressive stress in the circumferential direction in the regions P is smaller than the compressive stress in the circumferential direction in a case where only the crimping portions (50) are provided.

It has been found that the compressive stress increases the iron loss while the tensile stress decreases the iron loss. The radial fixing portions (60) are provided such that the tensile stress in the circumferential direction is generated in the regions P where the compressive stress in the circumferential direction is generated by the crimping portions (50) so that the compressive stress generated in the circumferential direction of the stator core (32) can be reduced.

### (6) Comparative Example

The stress distribution in a case where the crimping portions (50) and the radial fixing portions (60) are arranged on the same radial directions of the stator core (32) will be described. As illustrated in FIG. 8, in a case where the radial fixing portions (60) are provided without the crimping portions (50), the compressive stress in the circumferential direction is generated in the regions P. In addition, in a case where the crimping portions (50) are provided without the radial fixing portions (60), the compressive stress in the circumferential direction is generated in the regions P. Further, in a case where the radial fixing portions (60) and the crimping portions (50) are provided, the compressive stress generated in the circumferential direction in the regions P increases as compared with a case where only one of the radial fixing portions (60) or the crimping portions (50) is provided. When the crimping portions (50) and the radial fixing portions (60) are arranged on the same radial directions of the stator core (32), the compressive stress in the circumferential direction of the yoke (34) due to the crimping portions (50) and the radial fixing portions (60) is added together in the regions P, thereby increasing the compressive stress in the circumferential direction.

### (7) Features

(7-1)
The electric motor (30) of this embodiment has the radial fixing portions (60) and the crimping portions (50). The radial fixing portions (60) are each arranged within the area of the first angle between the two lines connecting the axial center of the stator core (32) and adjacent two of the crimping portions (50), and the casing (11) and the stator core (32) are fixed using a method of applying the compressive stress to the stator core (32) radially inward from an outside. The crimping portions (50) are each formed in the rectangular shape such that the long sides extend along the radial direction of the stator core (32) and the short sides extend along the circumferential direction of the stator core (32) when the stator core (32) is viewed in the axial direction.

When the crimping portions (50) are each formed in the rectangular shape such that the long sides extend along the radial direction and the short sides extend along the circumferential direction as described above, the compressive stress in the circumferential direction is generated on both sides of each crimping portion (50) in the circumferential direction. However, the radial fixing portions (60) and the crimping portions (50) are arranged so as to be shifted from each other in the circumferential direction, so that the compressive stress in the circumferential direction by the crimping portions (50) can be reduced by the tensile stress in the circumferential direction by the radial fixing portions (60). As a result, an increase in the iron loss can be reduced. In addition, the force on the stator core (32) is dispersed, and therefore, deformation or buckling of the stator (31) can be reduced.

(7-2)
In the electric motor (30) of this embodiment, the radial fixing portions (60) are each arranged at the position at which the compressive stress in the circumferential direction of the yoke (34) by the crimping portions (50) are reduced.

Since the tensile stress by the radial fixing portions (60), which acts in the same directions as those of the compressive stress by the crimping portions (50), acts to cancel the compressive stress, the compressive stress generated in the circumferential direction of the yoke (34) by the crimping portions (50) can be reduced.

(7-3)
In the electric motor (30) of this embodiment, the crimping portions (50) are each arranged such that the length from the outer peripheral edge of the yoke (34) to the crimping portion (50) is equal to or less than 1/3 of the length from the outer peripheral edge to the inner peripheral edge of the yoke (34) in the radial direction of the stator core (32).

The tensile stress in the circumferential direction by the radial fixing portions (60) is generated near the outer peripheral edge of the yoke (34). For this reason, the crimping portions (50) are provided closer to the outer peripheral edge of the yoke (34) so that the compressive stress generated in the circumferential direction by the crimping portions (50) at the positions closer to the outer peripheral edge of the yoke (34) can be reliably reduced by the tensile stress in the circumferential direction by the radial fixing portions (60).

(7-4)
In the electric motor (30) of this embodiment, the radial fixing portions (60) are each arranged between every adjacent two of the crimping portions (50) in the circumferential direction of the stator core (32). The radial fixing portions (60) are each provided between every adjacent two of the crimping portions (50) in the circumferential direction so that an increase in the compressive stress generated in the circumferential direction over the entire circumference of the stator core (32) can be reduced.

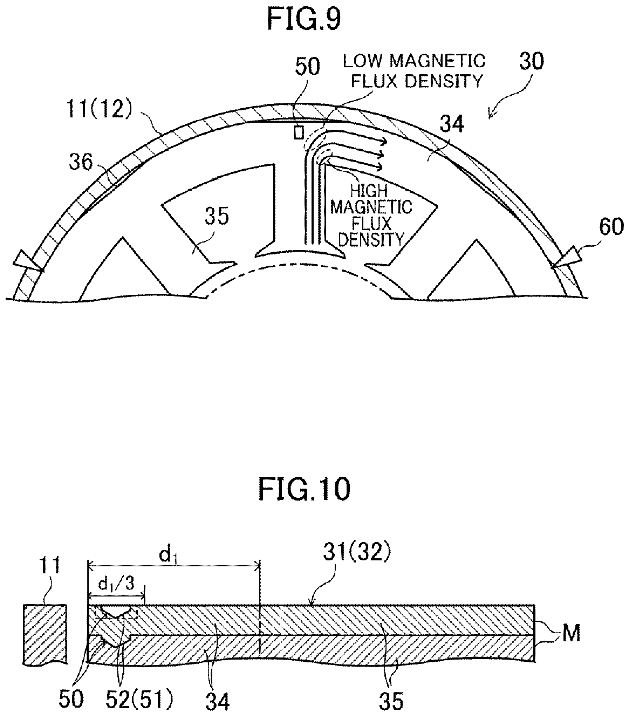

(7-5)
In the electric motor (30) of this embodiment, the crimping portions (50) are arranged radially outward of the teeth (35). As indicated by arrows in FIG. 9, a magnetic flux generated during operation of the electric motor (30) flows from the inside to the outside of the teeth (35) in the radial direction, and further flows in the circumferential direction of the yoke (34). Since the magnetic flux tends to flow on a shorter path, a greater amount of magnetic flux flows near the inner peripheral edge of the yoke (34), whereas less magnetic flux flows near the outer peripheral edge of the yoke (34). As a result, a magnetic flux density is high in a region of the yoke (34) relatively close to the teeth (35), and is low in a region of the yoke (34) relatively far from the teeth (35). Since an iron loss density is high in a region where the magnetic flux density is high, the crimping portions (50) are each arranged in such a region where the magnetic flux density is relatively low so that an increase in the iron loss due to the crimping portions (50) can be reduced.

In addition, when the stator core (32) is fixed in the casing (11), the teeth (35) prevent portions of the yoke (34) connected to the teeth (35) from being deformed radially inward. Since the tensile stress in the circumferential direction is likely to be applied radially outward starting from the connection portions between the teeth (35) and the yoke (34), the compressive stress in the circumferential direction by the crimping portions (50) can be reduced by providing the crimping portions (50) radially outward of the teeth (35).

### (8) Variations

An electric motor (30) of this example is different from the electric motor (30) of the above-described embodiments in the shape of the crimping portion (50). A configuration different from that of the above-described embodiments will be described below.

The crimping portions (50) of this example each have inclined surfaces (52) inclined from both short sides toward the center of the long side. Specifically, as illustrated in FIG. 10, the bottom (51) is formed in a V-shape in a cross section perpendicular to the circumferential direction of the stator core (32). In this example, the bottom (51) in the V-shape has the inclined surfaces (52). The stator core (32) may be broken along the long side of the crimping portion (50).

Since the crimping portion (50) is formed such that the bottom (51) has the inclined surfaces (52), these characteristics increase the compressive stress in the circumferential direction of the stator core (32) as compared to the crimping portion (50) of the above-described embodiments having the flat bottom (51). Thus, the crimping portion (50) of this example can be smaller than the crimping portion (indicated by a broken line in FIG. 10) of the above-described embodiments. When the crimping portion (50) can be reduced in size, degradation of magnetic properties around the crimping portion (50) can be reduced accordingly, an increase in the iron loss of the stator core (32) can be reduced, and a decrease in the efficiency of the electric motor (30) can be reduced. Further, since the crimping portion (50) can be reduced in size, the entire long side a of the crimping portion (50) can be easily arranged within an area of 1/3 of d1 from the outer peripheral edge of the yoke (34).

### (9) Other Embodiments

The above-described embodiments may be modified as follows.

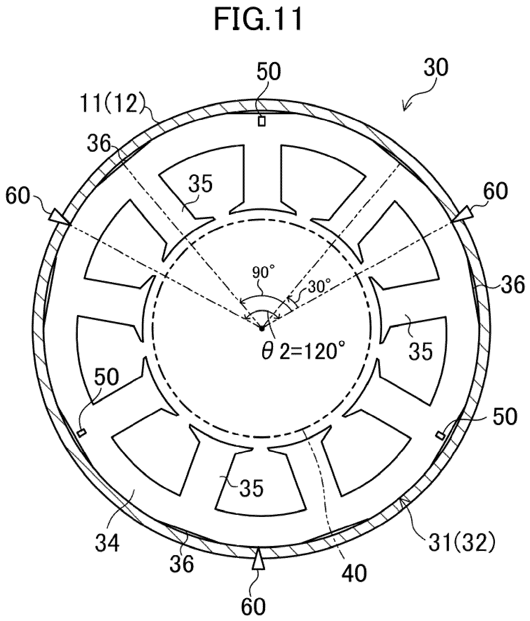

As illustrated in FIG. 11, when a second angle θ2 is defined between two lines connecting the axial center of the stator core (32) and adjacent two of the radial fixing portions (60) in the circumferential direction, the crimping portions (50) may each be arranged at a position corresponding to 1/4 to 3/4 of the second angle θ2. For example, in the above-described embodiments, the three radial fixing portions (60) are arranged at equal intervals in the circumferential direction, and therefore, the second angle is 120°. Thus, the crimping portions (50) may each be arranged in an area of 30° or more and 90° or less from one of the crimping portion (50) toward the other crimping portion (50) in the area of the second angle (120°) between adjacent two of the radial fixing portions (60) in the circumferential direction. In this example, the crimping portions (50) are each arranged at 1/2 of θ2. By arranging the crimping portion (50) in such an area, the compressive stress in the circumferential direction by the crimping portion (50) can be reduced, and an increase in the iron loss can be reduced.

The entire long side of the crimping portion (50) is not necessarily within the area of 1/3 of the first distance d from the outer peripheral edge of the yoke (34). Part of the long side of the crimping portion (50) may be within the area of 1/3 of the first distance d from the outer peripheral edge of the yoke (34). As described above, the crimping portion (50) may be arranged closer to the outer peripheral edge of the yoke (34).

The radial fixing portions (60) are each not necessarily arranged between every adjacent two of the crimping portions (50) in the circumferential direction of the stator core (32), and may be arranged between some of the adjacent crimping portions (50).

In the above-described variation, the inclined surfaces (52) of the crimping portion (50) may be formed in a U-shape, or the inclined surfaces (52) may be formed in part of the bottom (51). For example, the bottom (51) may include two inclined surfaces inclined from both short sides toward the long side and a flat surface connecting the two inclined surfaces.

The method of applying compressive stress used for the radial fixing portions (60) may be a method of applying point-like compressive stress to the stator core (32) radially inward from an outside by pressure welding or screwing.

The method of applying compressive stress used for the radial fixing portions (60) may be linear welding of the stator core (32) along the axial direction.

The method of applying compressive stress used for the radial fixing portions (60) may be a method of fixing the stator core (32) and the casing (11) by interference fit such that the outer peripheral surface of the stator core (32) and the inner peripheral surface of the casing (11) partially come into contact with each other in the circumferential direction. The radial fixing portions (60) in this method are portions of the outer peripheral surface of the stator core (32) in contact with the inner peripheral surface of the casing (11). The interference fit is, for example, shrink fit, cooling fit, or press fit. In the above-described embodiments, the core cuts (36) are formed in the outer peripheral surface of the stator core (32), and therefore, the stator core (32) and the casing (11) are partially in contact with each other. Specifically, the stator core (32) and the casing (11) come into contact with each other in an area narrower than the first angle θ1, and therefore, the effect of the invention of the present disclosure can be obtained.

The ordinal numbers such as "first," "second," and "third" described above are used to distinguish the terms to which these expressions are given, and do not limit the number and order of the terms.

### INDUSTRIAL APPLICABILITY

As described above, the present disclosure is useful for a rotating electric machine, a compressor, and a refrigeration apparatus.

### DESCRIPTION OF REFERENCE CHARACTERS

- 11: Casing
- 32: Stator Core
- 34: Yoke
- 35: Tooth
- 50: Crimping Portion
- 52: Inclined Surface
- 60: Radial Fixing Portion

## Claims

1. A rotating electric machine comprising:
a casing (11);
a stator core (32) having a plurality of electrical steel sheets stacked on each other and including a cylindrical yoke (34), a plurality of teeth (35) arranged in a circumferential direction and extending radially inward of the yoke (34), and crimping portions (50) arranged in the yoke (34) and fixing adjacent ones of the electrical steel sheets in a stacking direction, and
radial fixing portions (60) each arranged within an area of a first angle between two lines connecting an axial center of the stator core (32) and adjacent two of the crimping portions (50) in the circumferential direction and fixing the casing (11) and the stator core (32) using a method of applying compressive stress to the stator core (32) radially inward from an outside in a point-like or line-like manner, and
the crimping portions (50) being each formed in a rectangular shape having long sides extending along the radial direction of the stator core (32) and short sides extending along the circumferential direction of the stator core (32) when the stator core (32) is viewed in an axial direction.

2. The rotating electric machine of claim 1, wherein
the radial fixing portions (60) are each arranged at a position at which compressive stress acting in the circumferential direction of the yoke (34) by the crimping portions (50) is reduced.

3. The rotating electric machine of claim 1 or 2, wherein
the crimping portions (50) are each arranged at a position between 1/4 to 3/4 of a second angle between two lines connecting the axial center of the stator core (32) and adjacent two of the radial fixing portions (60) in the circumferential direction.

4. The rotating electric machine of any one of claims 1 to 3, wherein
the crimping portions (50) are each arranged such that a length from an outer peripheral edge of the yoke (34) to the crimping portions (50) is equal to or less than 1/3 of a length from the outer peripheral edge to an inner peripheral edge of the yoke (34) in the radial direction of the stator core (32).

5. The rotating electric machine of any one of claims 1 to 4, wherein
the radial fixing portions (60) are arranged between every adjacent ones of the crimping portions (50) in the circumferential direction of the stator core (32).

6. The rotating electric machine of any one of claims 1 to 5, wherein
the crimping portions (50) each have inclined surfaces (52) inclined from both short sides toward a center of a long side in a cross-sectional view of the stator core (32) orthogonal to the circumferential direction.

7. The rotating electric machine of any one of claims 1 to 6, wherein
the crimping portions (50) are arranged radially outward of the teeth (35).

8. A compressor comprising: the rotating electric machine of any one of claims 1 to 7.

9. A refrigeration apparatus comprising: the compressor of claim 8.

## Patentansprüche

1. Rotierende elektrische Maschine, umfassend:
ein Gehäuse (11);
einen Statorkern (32) mit einer Vielzahl von Elektrostahlblechen, die aufeinander gestapelt sind und ein zylindrisches Joch (34), eine Vielzahl von Zähnen (35), die in einer Umfangsrichtung angeordnet sind und sich radial einwärts des Jochs (34) erstrecken, und Crimpabschnitte (50), die in dem Joch (34) angeordnet sind und benachbarte der Elektrostahlbleche in einer Stapelrichtung fixieren, umfassen, und
radiale Fixierabschnitte (60), die jeweils innerhalb eines Bereichs eines ersten Winkels zwischen zwei Linien, die eine axiale Mitte des Statorkerns (32) und benachbarte zwei der Crimpabschnitte (50) in der Umfangsrichtung verbinden, angeordnet sind und das Gehäuse (11) und den Statorkern (32) unter Verwendung eines Verfahrens zum Aufbringen einer Druckspannung auf den Statorkern (32) radial einwärts von einer Außenseite in einer punktartigen oder linienartigen Weise fixieren, und
wobei die Crimpabschnitte (50) jeweils in einer rechteckigen Form mit langen Seiten, die sich entlang der radialen Richtung des Statorkerns (32) erstrecken, und kurzen Seiten, die sich entlang der Umfangsrichtung des Statorkerns (32) erstrecken, wenn der Statorkern (32) in einer axialen Richtung betrachtet wird, ausgebildet sind.

2. Rotierende elektrische Maschine nach Anspruch 1, wobei
die radialen Fixierabschnitte (60) jeweils an einer Position angeordnet sind, an der eine Druckspannung, die in der Umfangsrichtung des Jochs (34) durch die Crimpabschnitte (50) wirkt, reduziert wird.

3. Rotierende elektrische Maschine nach Anspruch 1 oder 2, wobei
die Crimpabschnitte (50) jeweils an einer Position zwischen 1/4 bis 3/4 eines zweiten Winkels zwischen zwei Linien, die die axiale Mitte des Statorkerns (32) und benachbarte zwei der radialen Fixierabschnitte (60) in der Umfangsrichtung verbinden, angeordnet sind.

4. Rotierende elektrische Maschine nach einem der Ansprüche 1 bis 3, wobei
die Crimpabschnitte (50) jeweils derart angeordnet sind, dass eine Länge von einer äußeren Umfangskante des Jochs (34) zu den Crimpabschnitten (50) gleich oder kleiner als 1/3 einer Länge von der äußeren Umfangskante zu einer inneren Umfangskante des Jochs (34) in der radialen Richtung des Statorkerns (32) ist.

5. Rotierende elektrische Maschine nach einem der Ansprüche 1 bis 4, wobei
die radialen Fixierabschnitte (60) zwischen jedem benachbarten der Crimpabschnitte (50) in der Umfangsrichtung des Statorkerns (32) angeordnet sind.

6. Rotierende elektrische Maschine nach einem der Ansprüche 1 bis 5, wobei
die Crimpabschnitte (50) jeweils geneigte Oberflächen (52) aufweisen, die von beiden kurzen Seiten zu einer Mitte einer langen Seite in einer Querschnittsansicht des Statorkerns (32) orthogonal zu der Umfangsrichtung geneigt sind.

7. Rotierende elektrische Maschine nach einem der Ansprüche 1 bis 6, wobei
die Crimpabschnitte (50) radial auswärts der Zähne (35) angeordnet sind.

8. Verdichter, umfassend: die rotierende elektrische Maschine nach einem der Ansprüche 1 bis 7.

9. Kühlvorrichtung, umfassend: den Verdichter nach Anspruch 8.

## Revendications

1. Machine électrique tournante comprenant :
un carter (11) ;
un noyau de stator (32) ayant une pluralité de feuilles d'acier électrique empilées les unes sur les autres et incluant une culasse cylindrique (34), une pluralité de dents (35) agencées dans une direction circonférentielle et s'étendant radialement vers l'intérieur de la culasse (34), et des portions de sertissage (50) agencées dans la culasse (34) et fixant des feuilles adjacentes des feuilles d'acier électrique dans une direction d'empilage, et
des portions de fixation radiales (60), chacune étant agencée au sein d'une zone d'un premier angle entre deux lignes connectant un centre axial du noyau de stator (32) et deux portions adjacentes des portions de sertissage (50) dans la direction circonférentielle et fixant le carter (11) et le noyau de stator (32) grâce à l'utilisation d'un procédé d'application d'une contrainte de compression sur le noyau de stator (32) radialement vers l'intérieur à partir de l'extérieur dans une manière ponctuelle ou une manière linéaire, et
les portions de sertissage (50) étant chacune formées en une forme rectangulaire ayant des côtés longs qui s'étendent le long de la direction radiale du noyau de stator (32) et des côtés courts qui s'étendent le long de la direction circonférentielle du noyau de stator (32) lorsque le noyau de stator (32) est vu dans une direction axiale.

2. Machine électrique tournante de la revendication 1, dans laquelle
les portions de fixation radiales (60) sont chacune agencées au niveau d'une position à laquelle la contrainte de compression agissant dans la direction circonférentielle de la culasse (34) par les portions de sertissage (50) est réduite.

3. Machine électrique tournante de la revendication 1 ou 2, dans laquelle les portions de sertissage (50) sont chacune agencées au niveau d'une position entre 1/4 à 3/4 d'un deuxième angle entre deux lignes connectant le centre axial du noyau de stator (32) et deux portions adjacentes des portions de fixation radiales (60) dans la direction circonférentielle.

4. Machine électrique tournante de n'importe laquelle des revendications 1 à 3, dans laquelle
les portions de sertissage (50) sont chacune agencées de telle sorte qu'une longueur à partir d'un bord périphérique externe de la culasse (34) jusqu'aux portions de sertissage (50) soit égale à ou inférieure à 1/3 d'une longueur à partir du bord périphérique externe jusqu'à un bord périphérique interne de la culasse (34) dans la direction radiale du noyau de stator (32).

5. Machine électrique tournante de n'importe laquelle des revendications 1 à 4, dans laquelle
les portions de fixation radiales (60) sont agencées entre chacune des portions adjacentes des portions de sertissage (50) dans la direction circonférentielle du noyau de stator (32).

6. Machine électrique tournante de n'importe laquelle des revendications 1 à 5, dans laquelle
les portions de sertissage (50) ont chacune des surfaces inclinées (52) lesquelles sont inclinées à partir à la fois de côtés courts vers un centre d'un côté long dans une vue en coupe transversale du noyau de stator (32) en un plan orthogonal par rapport à la direction circonférentielle.

7. Machine électrique tournante de n'importe laquelle des revendications 1 à 6, dans laquelle
les portions de sertissage (50) sont agencées radialement vers l'extérieur des dents (35).

8. Compresseur comprenant : la machine électrique tournante de n'importe laquelle des revendications 1 à 7.

9. Appareil de réfrigération comprenant : le compresseur de la revendication 8.
